(19) Europäisches Patentamt / European Patent Office / Office européen des brevets

(11) **EP 1 710 895 B1**

(12) **EUROPÄISCHE PATENTSCHRIFT**

(45) Veröffentlichungstag und Bekanntmachung des Hinweises auf die Patenterteilung:
**09.09.2009   Patentblatt 2009/37**

(21) Anmeldenummer: 06100837.1

(22) Anmeldetag: **25.01.2006**

(51) Int Cl.:
*H02K 9/02* (2006.01)   *H02K 9/04* (2006.01)
*G05B 23/02* (2006.01)   *G01K 7/42* (2006.01)
*F01P 7/02* (2006.01)   *H02K 9/06* (2006.01)
*G01R 31/36* (2006.01)

(54) **Verfahren und Vorrichtung zur Bereitstellung der Kühllufttemperatur eines luftgekühlten Fahrzeuggenerators**

Method and device for providing the cooling-air temperature of an air-cooled vehicle generator

Procédé et dispositif pour fournir la température de l'air de refroidissement d'un alternateur de véhicule refroidie à l'air

(84) Benannte Vertragsstaaten:
**DE ES FR GB IT SE**

(30) Priorität: **17.03.2005   DE 102005012272**

(43) Veröffentlichungstag der Anmeldung:
**11.10.2006   Patentblatt 2006/41**

(73) Patentinhaber: **ROBERT BOSCH GMBH**
**70442 Stuttgart (DE)**

(72) Erfinder: **Ben Salah, Amin**
**74321 Bietigheim-Bissingen (DE)**

(56) Entgegenhaltungen:
**DE-A1- 19 952 693       FR-A- 2 742 605**
**JP-A- 2003 041 935       US-A1- 2002 011 829**

Printed by Jouve, 75001 PARIS (FR)

**Beschreibung**

Die Erfindung betrifft ein Verfahren und eine Vorrichtung zur Bereitstellung der Kühllufttemperatur eines luftgekühlten Fahrzeuggenerators.

Stand der Technik

Ein wichtiger Gesichtspunkt in der Kraftfahrzeugtechnik ist die Gewährleistung der Startfähigkeit des Fahrzeugs. Zu diesem Zweck ist es bereits bekannt, unter Verwendung eines EPM-Steuergerätes den Stromverbrauch im Bordnetz zu messen und zu überwachen. Dies erfordert während der Fahrt eine ständige Kontrolle der Verbraucher, um das Zusammenspiel zwischen Motor, Generator und Batterie zu optimieren mit dem Ziel, der Batterie so wenig wie möglich Energie zu entnehmen. Dabei wird ein Generatormodell verwendet, das das Generatorverhalten nachbildet, um den Generatorstrom zu ermitteln. Zur Berechnung der verschiedenen Variablen des Generatormodells wird eine Information über die Kühlmitteltemperatur des Generators benötigt.

Im Falle des Vorliegens eines wassergekühlten Generators dient als Kühlmitteltemperatur die Kühlwassertemperatur, die üblicherweise auf dem CAN-Bus des Fahrzeugs zur Verfügung steht. Im Falle des Vorliegens eines luftgekühlten Generators ist es bereits bekannt, im Generatorregler einen Temperatursensor vorzusehen, um die benötigte Temperaturinformation zur Verfügung stellen zu können.

Aus der DE 199 41 004 A1 ist bereits ein Verfahren zur Ermittlung von elektrischen Ausgangsgrößen eines mit einem Spannungsregler gekoppelten Bordnetzgenerators in einem Kraftfahrzeug in Abhängigkeit von physikalischen Eingangsgrößen bekannt. Dabei wird an einem realen Bordgenerator mit Spannungsregler der Ausgangsstrom und die Ausgangsspannung als Funktion der Reglerspannung, der Drehzahl der Generatorwelle und der Ansauglufttemperatur am Generatorlüfterflügelrad ermittelt und gespeichert. Anhand der gespeicherten Daten wird eine der Größen Ausgangsstrom, Ausgangsspannung, Reglerspannung, Drehzahl oder Ansauglufttemperatur bei Vorgabe der übrigen Größen rechnerisch ermittelt.

Weiterhin sind aus der DE 101 50 378 A1 ein Verfahren und eine Vorrichtung zur Ermittlung der in einem Bordnetz verfügbaren elektrischen Leistung bekannt, die von einer Batterie und einem Generator bereitgestellt wird. Dabei erfolgt eine Ermittlung einer Batteriereserveleistung mittels eines Batteriemodells, eine Ermittlung einer Generatorreserveleistung mittels eines Generatormodells und eine Berechnung der gesamten zur Verfügung stehenden Reserveleistung aus der Batteriereserveleistung und der Generatorreserveleistung. Das Generatormodell erhält als Eingangsgrößen die Generatorspannung, die Generatordrehzahl und die Generatortemperatur.

Ferner ist aus der DE 102 00 733 A1 ein Generatormodell zur Ermittlung von Generatorkenngrößen insbesondere für ein Kraftfahrzeugbordnetz bekannt. Das Generatormodell weist eine Einheit zur Bestimmung des elektrischen Verhaltens des Generators auf. Dabei sind ein erster und ein zweiter Satz aus jeweils wenigstens drei Warm- und Kaltkennlinien für unterschiedliche Generatorspannungen hinterlegt, aus denen die Einheit unter Berücksichtigung einer aktuellen Generatortemperatur durch lineare Interpolation zwischen den Kennlinien den aktuellen Generatorstrom ermittelt. Das Generatormodell dient auch den Dokument US 2002/0011829 zur Ermittlung der Belastbarheit eines Generators.

Vorteile der Erfindung

Ein Verfahren mit den im Anspruch 1 angegebenen Merkmalen sowie eine Vorrichtung mit den im Anspruch 9 angegebenen Merkmalen weisen demgegenüber den Vorteil auf, dass beim Vorliegen von luftgekühlten Generatoren der Einsatz eines Temperatursensors im Generatorregler eingespart werden kann, was einen Kostenvorteil darstellt. Weiterhin wird bei luftgekühlten Generatoren, die über keinen Temperatursensor verfügen, die Möglichkeit geschaffen, eine Information für die Kühllufttemperatur bereitzustellen. Erreicht werden diese Vorteile insbesondere dadurch, dass bei luftgekühlten Generatoren ein Kühllufttemperaturberechnungsmodell verwendet wird, das die Kühllufttemperatur aus Informationen über die Fahrzeuggeschwindigkeit, das Übersetzungsverhältnis von Motordrehzahl zu Generatordrehzahl, die Generatordrehzahl, die Motortemperatur und die Generatorumgebungstemperatur berechnet.

Die zur Berechnung der Kühllufttemperatur benötigten Informationen werden dem Modell vorzugsweise über den CAN-Bus des Fahrzeugs übermittelt, so dass der Gegenstand der Erfindung in einfacher Weise realisierbar ist.

Das Kühllufttemperaturberechnungsmodell wird in vorteilhafter Weise in Form eines auf einem Mikrocomputer des Fahrzeugs laufenden Softwareprogrammes realisiert.

Weitere vorteilhafte Eigenschaften der Erfindung ergeben sich aus deren nachfolgender Erläuterung anhand der Zeichnung.

Zeichnung

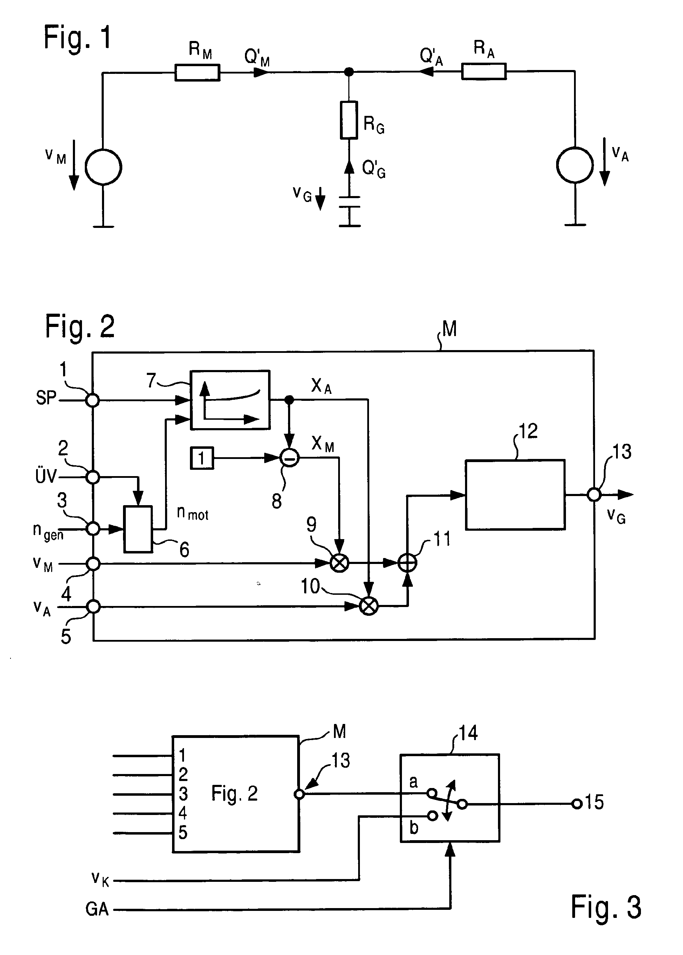

Die Figur 1 zeigt ein thermisches Ersatzschaltbild zur Veranschaulichung eines Kühllufttemperaturberechnungsmodells gemäß der Erfindung. Die Figur 2 zeigt ein Blockschaltbild einer Vorrichtung zur Bereitstellung der Kühllufttemperatur eines luftgekühlten Fahrzeuggenerators. Die Figur 3 zeigt ein Blockschaltbild einer Vorrichtung gemäß einer vorteilhaften Weiterbildung der Erfindung.

Beschreibung

Gemäß der vorliegenden Erfindung erfolgt eine Bereitstellung der Kühllufttemperatur eines luftgekühlten Fahrzeuggenerators unter Verwendung eines Kühllufttemperaturberechnungsmodells.

Die Figur 1 zeigt ein thermisches Ersatzschaltbild zur Veranschaulichung eines Kühllufttemperaturberechnungsmodells gemäß der Erfindung. In diesem Ersatzschaltbild ist mit $V_M$ die gemessene Motortemperatur, mit $R_M$ ein Widerstand, mit $Q'_M$ ein Wärmewert, mit $V_G$ die zu ermittelnde Kühllufttemperatur, mit $R_G$ ein Widerstand, mit $Q'_G$ ein Wärmewert, mit $V_A$ die Generatorumgebungstemperatur, mit $R_A$ ein Widerstand und mit $Q'_A$ ein Wärmewert bezeichnet.

Wie aus diesem Ersatzschaltbild hervorgeht, gelten die folgenden Beziehungen:

$$v_M - R_M \bullet Q'_M + R_G \bullet Q'_G - v_G = 0 \tag{1}$$

$$v_A - R_A \bullet Q'_A + R_G \bullet Q'_G - v_G = 0 \tag{2}$$

$$v_M - R_M \bullet Q'_M + R_A \bullet Q'_A - v_A = 0 \tag{3}$$

$$Q'_M + Q'_A + Q'_G = 0 \tag{4}$$

$$Q'_G = - C_G \bullet (dv_G/dt) \tag{5}.$$

Mit folgenden Definitionen

$$v_G = R_G \bullet C_G \tag{6}$$

$$R_P = 1/(1/R_A + 1/R_M + 1/R_G) \tag{7}$$

$$X_M = (R_P/R_M) \tag{8}$$

$$X_A = (R_P/R_A) \tag{9}$$

lässt sich als Basis für das Kühllufttemperaturberechnungsmodell die folgende Beziehung ableiten:

$$v_G = (v_G \bullet v_{G0} + v_M \bullet X_M + v_A \bullet X_A)/(v_G \bullet s + X_m + X_A) \tag{10}$$

In den vorgenannten Beziehungen ist $V_{G0}$ ein Anfangswert für die Kühllufttemperatur, $X_M$ ein Gewichtungsfaktor, $X_A$ ein Gewichtungsfaktor, s ein Laplacefaktor, $R_p$ der Gesamt-Ersatzwiderstand des in der Figur 1 gezeigten Ersatzschaltbildes und $C_G$ eine Kapazität.

Als Anfangswert $V_{G0}$ für die Kühllufttemperatur wird die beim Motorstart des Fahrzeugs gemessene Generatorumgebungstemperatur verwendet.

Die Umsetzung der obigen Beziehung (10) in eine Vorrichtung zur Bereitstellung der Kühllufttemperatur eines luftgekühlten Fahrzeuggenerators ist in der Figur 2 veranschaulicht.

Die dort gezeigte Vorrichtung weist Eingangsanschlüsse 1 - 5 auf. Am Eingangsanschluss 1 liegt eine Information über die Fahrzeuggeschwindigkeit SP an. Am Eingangsanschluss 2 liegt eine Information über das Übersetzungsverhältnis ÜV von Motordrehzahl zu Generatordrehzahl an. Am Eingangsanschluss 3 liegt eine Information über die Generatordrehzahl $n_{gen}$ an. Am Eingangsanschluss 4 liegt eine Information über die Motortemperatur $V_M$ an, die auf dem CAN-Bus des Fahrzeugs verfügbar ist. Am Eingangsanschluss 5 liegt eine Information über die Generatoraußentemperatur $v_A$ an, die ebenfalls auf dem CAN-Bus des Fahrzeugs verfügbar ist. Die an den Eingangsanschlüssen 1 - 5 anliegenden Informationen werden dem Kühllufttemperaturberechnungsmodell M vorzugsweise über den CAN-Bus des Fahrzeugs zugeführt.

Das Modell M kann alternativ zu der dargestellten Vorrichtung auch einen einzigen Eingangsanschluss aufweisen, der mit dem CAN-Bus des Fahrzeugs verbunden ist. In diesem Fall erfolgt die Gewinnung der vom Modell benötigten Informationen innerhalb des Modells selbst, welches von einem Mikrocomputer realisiert sein kann, der ein Softwareprogramm ausführt.

Die Eingangsanschlüsse 2 und 3 der in der Figur 2 gezeigten Vorrichtung sind mit einem Divisionsglied 6 verbunden, in welchem aus dem Übersetzungsverhältnis ÜV von Motordrehzahl zu Generatordrehzahl und der Generatordrehzahl $n_{gen}$ die Motordrehzahl $n_{mot}$ berechnet wird. Dies geschieht nach der folgenden Beziehung:

$$n_{mot} = n_{gen}/\text{ÜV} \qquad\qquad (11).$$

Die berechnete Motortemperatur $n_{mot}$ und die am Eingangsanschluss 1 anliegende Information über die Fahrzeuggeschwindigkeit SP werden zur Adressierung eines Kennfeldes 7 verwendet, in welchem die Gewichtungsfaktoren $X_A$ hinterlegt sind, die in Abhängigkeit von der Motordrehzahl und der Fahrzeuggeschwindigkeit verschiedene Werte aufweisen, die im voraus messtechnisch ermittelt wurden.

Im Subtrahierer 8 wird der Gewichtungsfaktor $X_M$ gemäß der folgenden Beziehung berechnet:

$$X_M = 1 - X_A \qquad\qquad (12).$$

Mit diesem Gewichtungsfaktor $X_M$ wird im Multiplikationsglied 9 die am Eingangsanschluss 4 anliegende Information über die Motortemperatur $v_M$ multipliziert.

Ferner wird im Multiplikationsglied 10 der Gewichtungsfaktor $X_A$ mit der am Eingangsanschluss 5 anliegenden Information über die Generatoraußentemperatur $V_A$ multipliziert.

Die von den Multiplikationsgliedern 9 und 10 bereitgestellten Multiplikationsergebnisse werden in einem Additionsglied 11 aufaddiert.

Die am Ausgang des Additionsgliedes 11 zur Verfügung stehenden Werte werden über ein PT1-Glied 12 an den Ausgangsanschluss 13 des Modells M weitergeleitet. Dort steht die gewünschte Information über die mittels des Modells M zu ermittelnde Kühllufttemperatur zur Verfügung.

Die am Ausgang 13 des Modells M bereitgestellte Information über die Kühllufttemperatur $V_G$ wird an ein Generatormodell weitergeleitet, welchem weiterhin Informationen über die Generatorspannung und die Generatordrehzahl zugeführt werden. Das Generatormodell ermittelt aus den genannten Ausgangsgrößen die Generatorleistung. Diese kann zu der mittels eines Batteriemodells ermittelten Batterieleistung hinzuaddiert werden, um eine Information über die im Bordnetz des Fahrzeugs verfügbare elektrische Leistung zu erhalten. Dies wiederum schafft die Möglichkeit, das Zusammenspiel zwischen Motor, Generator und Batterie in dem Sinne zu optimieren, dass die Startfähigkeit des Fahrzeugs gewährleistet ist.

Der Vorteil der Erfindung besteht dabei insbesondere darin, dass die vom Generatormodell benötigte Information über die Kühllufttemperatur des Generators auch dann bereitgestellt werden kann, wenn der Generatorregler nicht mit einem Temperatursensor versehen ist. Dieser Vorteil wird im Wesentlichen dadurch erreicht, dass die benötige Information über die Kühllufttemperatur des Generators unter Verwendung eines Kühllufttemperaturberechnungsmodells berechnet wird, welchem als Eingangsgrößen vorzugsweise über den CAN-Bus des Fahrzeugs Informationen über die Fahrzeuggeschwindigkeit, das Übersetzungsverhältnis von Motordrehzahl zu Generatordrehzahl, die Generatoraußentemperatur, die Motortemperatur und die Generatordrehzahl zugeführt werden.

Eine vorteilhafte Weiterbildung der Erfindung ist in der Figur 3 veranschaulicht. Dort ist eine Vorrichtung gezeigt, die sowohl bei luftgekühlten als auch bei wassergekühlten Generatoren verwendbar ist, um die benötigte Information über die Kühlmitteltemperatur bereitzustellen.

Beim Vorliegen eines luftgekühlten Generators erfolgt die Ermittlung der Kühllufttemperatur $v_G$ ebenso wie es oben im Zusammenhang mit der Figur 2 beschrieben wurde. Die ermittelte Information über die Kühllufttemperatur wird vom Ausgangsanschluss 13 des Modells M an den Schaltkontakt a eines Schalters 14 geführt und in der gezeigten Schaltstellung des Schalters 14 an den Ausgangsanschluss 15 weitergeleitet.

Liegt hingegen ein wassergekühlter Generator vor, dann wird die in diesem Fall vorliegende Kühlwassertemperatur $v_k$ über den Schalter 14, der sich in seiner Schaltstellung b befindet, an den Ausgangsanschluss 15 weitergeleitet.

Die Umschaltung des Schalters 14 erfolgt mittels eines Schaltersteuersignals GA, welches eine Information darüber enthält, ob das jeweilige Fahrzeug mit einem luftgekühlten Generator oder einem wassergekühlten Generator ausgestattet ist. Die Information über die Kühlwassertemperatur $v_K$ und die Generatorart GA werden der in der Figur 3 gezeigten Vorrichtung vorzugsweise ebenfalls über den CAN-Bus des Fahrzeugs zugeführt.

Bezugszeichenliste:

| | |
|---|---|
| GA | Information über die Generatorart |
| M | Kühllufttemperaturberechnungsmodell |
| $n_{gen}$ | Generatordrehzahl |
| $n_{mot}$ | Motordrehzahl |
| $Q'_A$ | Wärmewert |
| $Q'_G$ | Wärmewert |
| $Q'_M$ | Wärmewert |
| $R_A$ | Widerstand |
| $R_G$ | Widerstand |
| $R_M$ | Widerstand |
| SP | Fahrzeuggeschwindigkeit |
| ÜV | Übersetzungsverhältnis |
| $V_A$ | Generatorumgebungstemperatur |
| $V_G$ | Kühllufttemperatur (Ansauglufttemperatur) |
| $V_K$ | Kühlwassertemperatur |
| $V_M$ | Motortemperatur |
| $X_A$ | Gewichtungsfaktor |
| $X_M$ | Gewichtungsfaktor |

| | |
|---|---|
| 1 | Eingangsanschluss |
| 2 | Eingangsanschluss |
| 3 | Eingangsanschluss |
| 4 | Eingangsanschluss |
| 5 | Eingangsanschluss |
| 6 | Divisionsglied |
| 7 | Kennfeld |
| 8 | Subtrahierer |
| 9 | Multiplikationsglied |
| 10 | Multiplikationsglied |
| 11 | Additionsglied |
| 12 | PT1-Glied |
| 13 | Ausgangsanschluss des Modells M |
| 14 | Schalter |
| 15 | Ausgangsanschluss |

**Patentansprüche**

1. Verfahren zur Bereitstellung der Kühllufttemperatur ($V_G$) eines luftgekühlten Fahrzeuggenerators mit folgenden Schritten:

- Bereitstellung von Informationen über die Fahrzeuggeschwindigkeit (SP), das Übersetzungsverhältnis von Motordrehzahl zu Generatordrehzahl (ÜV) die Generatordrehzahl ($n_{gen}$), die Motortemperatur (Vn) und die Generatorumgebungstemperatur ($V_A$),
- Berechnen der Kühllufttemperatur ($V_G$) aus diesen Informationen unter Verwendung eines Kühllufttemperaturberechnungsmodells (M) und
- Ausgeben der berechneten Kühllufttemperatur ($V_G$).

2. Verfahren nach Anspruch 1, **dadurch gekennzeichnet, dass** die Berechnung der Kühllufttemperatur gemäß der folgenden Beziehung vorgenommen wird:

$$v_G = (v_G \bullet v_{G0} + v_M \bullet X_M + v_A \bullet X_A) / (v_G \bullet s + X_m + X_A),$$

wobei $V_G$ die Kühllufttemperatur, $V_{G0}$ ein Anfangswert für die Kühllufttemperatur, $V_M$ die Motortemperatur, $X_M$ ein Gewichtungsfaktor, $V_A$ die Generatorumgebungstemperatur, $X_A$ ein Gewichtungsfaktor und s ein Laplacefaktor sind.

3. Verfahren nach Anspruch 1 oder 2, **dadurch gekennzeichnet, dass** die Informationen über die Fahrzeuggeschwindigkeit, das Übersetzungsverhältnis von Motordrehzahl zu Generatordrehzahl, die Generatordrehzahl, die Motortemperatur und die Generatorumgebungstemperatur dem Modell über den CAN-Bus des Fahrzeugs zugeführt werden.

4. Verfahren nach Anspruch 2 oder 3, **dadurch gekennzeichnet, dass** der Gewichtungsfaktor $X_A$ unter Verwendung eines abgespeicherten Kennfeldes oder einer Kennlinie ermittelt wird.

5. Verfahren nach Anspruch 4, **dadurch gekennzeichnet, dass** die Fahrzeuggeschwindigkeit und die Motordrehzahl zur Adressierung des Kennfeldes verwendet werden.

6. Verfahren nach Anspruch 5, **dadurch gekennzeichnet, dass** die Motordrehzahl gemäß der folgenden Beziehung berechnet wird:

$$n_{mot} = \text{ÜV}/n_{gen}.$$

7. Verfahren nach einem der Ansprüche 4 - 6, **dadurch gekennzeichnet, dass** der Faktor $X_M$ gemäß der folgenden Beziehung berechnet wird:

$$X_M = 1 - X_A.$$

8. Verfahren nach einem der Ansprüche 2 - 7, **dadurch gekennzeichnet, dass** als Anfangswert für die Kühllufttemperatur die beim Motorstart gemessene Umgebungstemperatur verwendet wird.

9. Vorrichtung zur Bereitstellung der Kühllufttemperatur ($V_G$) eines luftgekühlten Fahrzeuggenerators, welche aufweist:

- einen oder mehrere Eingangsanschlüsse (1-5) zum Empfangen von Informationen über die Fahrzeuggeschwindigkeit (SP), das Übersetzungsverhältnis von Motordrehzahl zu Generatordrehzahl (ÜV), die Generatordrehzahl ($n_{gen}$), die Motortemperatur ($V_M$) und die Generatorumgebungstemperatur ($V_A$),
- ein Kühllufttemperaturberechnungsmodell (M) zur Berechnung der Kühllufttemperatur ($V_G$) aus diesen Informationen und
- einen Ausgangsanschluss (13), an welchem die berechnete Kühllufttemperatur ausgegeben wird.

10. Vorrichtung nach Anspruch 9, **dadurch gekennzeichnet, dass** das Kühllufttemperaturberechnungsmodell zur Berechnung der Kühllufttemperatur nach folgender Beziehung vorgesehen ist:

$$v_G = (v_G \bullet v_{G0} + v_M \bullet X_M + v_A \bullet X_A)/(v_G \bullet s + X_m + X_A),$$

wobei $V_G$ die Kühllufttemperatur, $V_{G0}$ ein Anfangswert für die Kühllufttemperatur, $V_M$ die Motortemperatur, $X_M$ ein Gewichtungsfaktor, $V_A$ die Generatorumgebungstemperatur, $X_A$ ein Gewichtungsfaktor und s ein Laplacefaktor sind.

**11.** Vorrichtung nach Anspruch 9 oder 10, **dadurch gekennzeichnet, dass** der Eingangsanschluss an den CAN-Bus des Fahrzeugs angeschlossen ist.

**12.** Vorrichtung nach Anspruch 10 oder 11, **dadurch gekennzeichnet, dass** sie einen Speicher aufweist, in welchem Gewichtungsfaktoren $X_A$ in Form eines Kennfeldes oder einer Kennlinie abgespeichert sind.

**13.** Vorrichtung nach Anspruch 12, **dadurch gekennzeichnet, dass** das Kühllufttemperaturberechnungsmodell den Speicher in Abhängigkeit von der Fahrzeuggeschwindigkeit und der Motordrehzahl adressiert.

**14.** Vorrichtung nach Anspruch 13, **dadurch gekennzeichnet, dass** das Kühllufttemperaturberechnungsmodell die Motordrehzahl gemäß der folgenden Beziehung berechnet:

$$n_{mot} = \ddot{U}V/n_{gen}.$$

**15.** Vorrichtung nach einem der Ansprüche 12 - 14, **dadurch gekennzeichnet, dass** das Kühllufttemperaturberechnungsmodell den Gewichtungsfaktor $X_M$ gemäß der folgenden Beziehung berechnet:

$$X_M = 1 - X_A.$$

**16.** Vorrichtung nach einem der Ansprüche 10 - 15, **dadurch gekennzeichnet, dass** das Kühllufttemperaturberechnungsmodell als Anfangswert für die Kühllufttemperatur die beim Motorstart gemessene Umgebungstemperatur verwendet.

## Claims

**1.** Method for providing the cooling-air temperature ($V_G$) of an air-cooled vehicle generator, having the following steps:

- provision of information about the vehicle speed (SP), the transmission ratio of the engine speed to the generator speed (ÜV), the generator speed ($N_{gen}$), the engine temperature ($V_M$) and the temperature of the surroundings of the generator ($V_A$),
- calculation of the cooling air temperature ($V_G$) from this information using a cooling-air temperature calculated (M) and
- outputting of the calculated cooling-air temperature ($V_G$).

**2.** Method according to Claim 1, **characterized in that** the cooling-air temperature is calculated according to the following relationship:

$$v_G = (v_G \bullet v_{G0} + v_M \bullet X_M + v_A \bullet X_A)/(v_G \bullet s + X_m + X_A),$$

where $V_G$ is the cooling-air temperature, $V_{G0}$ is an initial value for the cooling-air temperature, $V_M$ is the engine temperature, $X_M$ is a weighting factor, $V_A$ is the temperature of the surroundings of the generator, $X_A$ is a weighting factor and S is a Laplace factor.

3. Method according to Claim 1 or 2, **characterized in that** the information about the vehicle speed, the transmission ratio of the engine speed to the generator speed, the generator speed, the engine temperature and the temperature of the surroundings of the generator are fed to the model via the vehicle's CAN bus.

4. Method according to Claim 2 or 3, **characterized in that** the weighting factor $X_A$ is determined using a stored characteristic diagram or a characteristic curve.

5. Method according to Claim 4, **characterized in that** the vehicle speed and the engine speed are used to address the characteristic diagram.

6. Method according to Claim 5, **characterized in that** the engine speed is calculated according to the following relationship:

$$n_{mot} \;=\; \ddot{U}V/n_{gen}.$$

7. Method according to one of Claims 4-6, **characterized in that** the factor $X_M$ is calculated according to the following relationship:

$$X_M \;=\; 1 \;-X_A.$$

8. Method according to one of Claims 2-7, **characterized in that** the temperature of the surroundings which is measured when the engine starts is used as the initial value for the cooling-air temperature.

9. Device for providing the cooling-air temperature ($V_G$) of an air-cooled vehicle generator, which device has:

   - one or more input terminals (1-5) for receiving information about the vehicle speed (SP), the transmission ratio of the engine speed to the generator speed (ÜV), the generator speed ($N_{gen}$), the engine temperature ($V_M$) and the temperature of the surroundings of the generator ($V_A$),
   - a cooling-air temperature calculation model (M) for calculating the cooling-air temperature ($V_G$) from this information,
   and
   - an output terminal (13) at which the calculated cooling-air temperature is output.

10. Device according to Claim 9, **characterized in that** the cooling-air temperature calculation model is provided for calculating the cooling-air temperature according to the following relationship:

$$v_G \;=\; (v_G \bullet v_{G0} + v_M \bullet X_M + v_A \bullet X_A)/(v_G \bullet s + X_m + X_A),$$

where $V_G$ is the cooling-air temperature, $V_{G0}$ is an initial value for the cooling-air temperature, $V_M$ is the engine temperature, $X_M$ is a weighting factor, $V_A$ is the temperature of the surroundings of the generator, $X_A$ is a weighting factor and s is Laplace factor.

11. Device according to Claim 9 or 10, **characterized in that** the input terminal is connected to the vehicle's CAN bus.

12. Device according to Claim 10 or 11, **characterized in that** it has a memory in which weighting factors $X_A$ are stored in the form of a characteristic diagram or a characteristic curve.

13. Device according to Claim 12, **characterized in that** the cooling-air temperature calculation model addresses the memory as a function of the vehicle speed and the engine speed.

**14.** Device according to Claim 13, **characterized in that** the cooling-air temperature calculation model calculates the engine speed according to the following relationship:

$$n_{mot} = \ddot{U}V/n_{gen}.$$

**15.** Device according to one of Claims 12-14, **characterized in that** the cooling-air temperature calculation model calculates the weighting factor $X_M$ according to the following relationship:

$$X_M = 1 - X_A.$$

**16.** Device according to one of Claims 10-15, **characterized in that** the cooling-air temperature calculation model uses, as the initial value for the cooling-air temperature, the temperature of the surroundings which is measured when the engine starts.

**Revendications**

**1.** Procédé pour fournir la température de l'air de refroidissement ($V_G$) d'un générateur de véhicule refroidi par de l'air, et comprenant les étapes suivantes :

- fourniture des informations concernant la vitesse du véhicule (SP), le rapport de transmission de la vitesse de rotation du moteur à la vitesse de rotation du générateur (ÜV), la vitesse de rotation du générateur ($n_{gen}$), la température du moteur ($V_M$) et la température ambiante du générateur ($V_A$),
- calcul de la température de l'air de refroidissement ($V_G$) à partir de ces informations en utilisant un modèle de calcul de la température de refroidissement (11), et
- émission de la température calculée de l'air de refroidissement ($V_G$).

**2.** Procédé selon la revendication 1,
**caractérisé en ce que**
le calcul de la température de l'air de refroidissement se fait suivant la relation donnée ci-après :

$$v_G = (v_G) \bullet v_{G0} + v_M \bullet X_M + v_A \bullet X_A) / (v_G \bullet s + X_m + X_A),$$

dans cette relation,

- $V_G$ représente la température de l'air de refroidissement,
- $V_{G0}$ représente la valeur initiale de la température de l'air de refroidissement,
- $V_M$ représente la température du moteur,
- $X_M$ représente un coefficient de pondération,
- vA représente la température ambiante du générateur,
- $X_A$ représente un coefficient de pondération, et
- s représente la transformation de Laplace.

**3.** Procédé selon la revendication 1 ou 2,
**caractérisé en ce que**
les informations concernant la vitesse du véhicule, le rapport de transmission de la vitesse de rotation du moteur à la vitesse de rotation du générateur, la vitesse de rotation du générateur, la température du moteur et la température ambiante du générateur sont fournies au modèle par l'intermédiaire du bus CAN du véhicule.

**4.** Procédé selon la revendication 2 ou 3,

**caractérisé en ce que**
le coefficient de pondération $X_A$ se détermine en utilisant un champ de caractéristiques mis en mémoire ou une courbe caractéristique.

**5.** Procédé selon la revendication 4,
**caractérisé en ce qu'**
on utilise la vitesse du véhicule et/ou la vitesse de rotation pour adresser le champ de caractéristiques.

**6.** Procédé selon la revendication 5,
**caractérisé en ce qu'**
on calcule la vitesse de rotation du moteur en appliquant la relation suivante :

$$n_{mot} = \ddot{U}V / n_{gen} \ .$$

**7.** Procédé selon les revendications 4 à 6,
**caractérisé en ce qu'**
on calcule le coefficient $X_M$ selon la relation suivante :

$$X_M = 1 - X_A \ .$$

**8.** Procédé selon les revendications 2 à 7,
**caractérisé en ce que**
comme valeur initiale de la température de l'air de refroidissement, on utilise la température ambiante mesurée au démarrage du moteur.

**9.** Dispositif pour fournir la température de l'air de refroidissement ($V_G$) d'un générateur de véhicule refroidi par de l'air, dispositif comprenant :

- une ou plusieurs bornes d'entrée (1-5) pour recevoir des informations concernant la vitesse (SP) du véhicule, le rapport de transmission entre la vitesse de rotation du moteur et la vitesse de rotation du générateur (ÜV), la vitesse de rotation du générateur ($n_{gen}$), la température du moteur ($V_M$) et la température ambiante du générateur ($V_A$),
- on utilise un modèle de calcul de température de l'air de refroidissement (M) pour calculer la température de l'air de refroidissement ($V_A$) à partir de ces informations, et
- une borne de sortie (13) qui fournit la température calculée de l'air de refroidissement.

**10.** Dispositif selon la revendication 9,
**caractérisé en ce que**
le modèle de calcul de la température de l'air de refroidissement pour calculer celle-ci se fait selon la relation donnée ci-après :

$$v_G = (v_G \cdot v_{G0} + v_M \bullet X_M + v_A \bullet X_A) \ / \ (v_G \bullet s + X_m + X_A),$$

dans laquelle :

- $V_G$ représente la température de l'air de refroidissement,
- $V_{G0}$ représente la valeur initiale de la température de l'air de refroidissement,
- $V_M$ représente la température du moteur,
- $X_M$ représente un coefficient de pondération,
- $V_A$ représente la température ambiante du générateur,

- $X_A$ représente un coefficient de pondération, et
- S représente la transformation de Laplace.

**11.** Dispositif selon la revendication 9 ou 10,
   **caractérisé en ce que**
   la borne d'entrée est reliée au bus CAN du véhicule.

**12.** Dispositif selon la revendication 10 ou 11,
   **caractérisé en ce qu'**
   il comporte une mémoire dans laquelle est enregistré le coefficient de pondération $X_A$ sous la forme d'un champ de caractéristiques ou d'une courbe caractéristique.

**13.** Dispositif selon la revendication 12,
   **caractérisé en ce que**
   le modèle de calcul de la température de l'air de refroidissement adresse la mémoire en fonction de la vitesse du véhicule et de la vitesse de rotation du moteur.

**14.** Dispositif selon la revendication 13,
   **caractérisé en ce que**
   le modèle de calcul de la température de l'air de refroidissement calcule la vitesse de rotation du moteur en appliquant la relation suivante :

$$n_{mot} = \ddot{U}V/n_{gen} \ .$$

**15.** Dispositif selon les revendications 12-14,
   **caractérisé en ce que**
   le modèle de calcul de la température de l'air de refroidissement calcule le coefficient de pondération $X_M$ en appliquant la relation suivante :

$$X_M = 1 - X_A \ .$$

**16.** Dispositif selon les revendications 10 à 14,
   **caractérisé en ce que**
   le modèle de calcul de la température de l'air de refroidissement utilise comme valeur initiale de la température de l'air de refroidissement, la température ambiante mesurée au démarrage du moteur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19941004 A1
- DE 10150378 A1
- DE 10200733 A1
- US 20020011829 A